# EUROPEAN PATENT APPLICATION

(11) **EP 1 791 229 A1**
(43) Date of publication of application: **30.05.2007**
(21) Application number: 05111335.5
(22) Date of filing: 25.11.2005
(51) Int. Cl.: H01S 3/00, B23K 26/06

(54) **Method for reducing thermal effect of a cutting lens**

(71) Applicant: Lambda Research Optics Europe, 9810 Nazareth-Eke (BE)
(72) Inventor: Muys, Peter, 9030 Gent (BE)
(74) Representative: Gevers, François

(57) **Abstract**

Method for reducing thermal effect (thermal lensing and stress birefringence) of a cutting lens used in high power laser systems, characterised in that use is made of radially polarised laser light.

## Description

The present invention relates to a method for reducing thermal effect of a cutting lens, more particularly, of a cutting lens for the cutting of steel plates using CO₂ laser light.

Over the last 10 years, the cutting of steel plates using CO₂ laser light has been developed in an important and mature technology. Since machines aimed to the cutting of steel plates are capital intensive, there is a continuous demand to upgrade their productivity.

More specifically, for upgrading the productivity of such high power laser cutting machines, higher cutting speeds have to be used so that more plates can be cut per hour and therefore, the laser power has to increase. Hence, there is a need for optics, more particularly cutting lenses, being able to withstand the very high transmitted powers.

As described in EP 0 365 511, it is known that the lens of a high power laser cutting machine has the property of transmitting a known percentage of the laser light generated in a laser tube and reflecting or absorbing the remaining percentage. The lens must not degrade the beam characteristics by deforming under the influence of the high power laser radiation itself. However, it is unavoidable that the lens absorbs a part of the transmitted light. The absorbed laser light heats up the lens and causes expansion and thermal stresses.

There are two predominant thermal effects : the thermal lensing and the stress birefringence. The thermal lensing results in a change of the effective focal length of the lens at elevated temperatures. The stress birefringence is created by the non-uniform thermal dilatation of the lens body. At the centre of the lens, the absorbed heat expands the lens material and at the cooled edge, the material is not willing to expand. Through the elasto-optic effect, this leads to changes of the refractive index. This leads to thermal aberrations and hence to a degradation of the quality of the focal spot of the lens.

Therefore, for increasing the laser power of the high power laser cutting machine, it is required to reduce the thermal effect to prevent changes of the refractive index, thermal aberrations and degradations of the quality of the focal spot of the lens.

It is thus required to minimise the lens temperature and/or the temperature gradients.

A first solution is found in EP 0 365 511 which discloses a process of cooling a lens by a turbulent gas film for reducing the thermal effect by decreasing the heat absorption by the lens. This process is based on a conductive heat transfer from the lens surface to the gas film.

A second solution is found in US 6 020 992 which describes the use of low absorption antireflex-coatings for reducing the thermal effect by diminishing the absorption of the heat in the lens.

A third solution is found in EP 1 380 870 which describes a lens with improved heat transfer properties by providing a flat flange to the lens edge. Hence, the thermal contact between the lens and its water cooled support mount is improved and the lens temperature is reduced.

A fourth solution is found in US 6 603 601 which discloses an infrared laser optical element in which a dense optical thin film with a low laser absorption ang high moisture resistance is formed on the surface thereof. The optical element comprises a smoothed main surface, a BaF₂ film formed on the main surface and then a ZnSe film formed on said BaF₂ film. Hence a dense film of BaF₂ can be formed and the absorption of the entire coating can be maintained to a value as low as 0,15 % at most as the optical element.

Unfortunately, the aforementioned solutions all present the disadvantage of providing complex lenses or complex processes which increase the cost of the high power laser cutting machine operation. For example, some aforementioned solutions are based on very low absorption coatings which present the disadvantages to rely on difficult and critical process wherein the yield is generally reduced. Hence, the cost of the high power laser cutting machine operation is increased.

The invention intends to solve at least partially the aforementioned problems by providing a method for reducing thermal effect of a cutting lens used in high power laser systems, characterised in that use is made of radially polarised laser light.

Therefore, the method according to the invention is also valid on regular cutting lenses, for example, lenses without the very low absorbing anti reflex coatings.

By the terms "radially polarised laser light or radial polarisation", it is intended either a radially or azimuthally polarised laser light or respectively a radial or azimuthal polarisation. Both azimuthal and radial polarisation are obtained by a proper superposition of two perpendicular polarised laser beams. The azimuthal polarisation can be transformed to radial polarisation by means of an optical element.

By using a specific polarisation state, i.e. a radial polarisation state, of the laser light which is incident on the cutting lens, the thermal effect is reduced and therefore, the cutting speed can be increased.

Radial or azimuthal polarisation of laser beams as such is known from "R. Oron et al., The Formation of Laser Beams with Pure azimuthal or radial Polarization, Applied Physics Letters, Vol. 77, 3322-3324 (Nov. 2000) which is incorporated by reference.

A laser beam with radial (or azimuthal) polarisation shows a ring shaped intensity distribution. As a consequence, the heat generated in the lens will also show a ring shape. If the Fourier heat conduction equation is solved with this ring shaped heat distribution as boundary condition, it is found that the resulting temperature distribution will show a nearly top hat distribution. So globally speaking, the lens will heat up, but in a nearly uniform way. Since temperature gradients are diminished in this way, the lens will also show less thermal effect compared to the case where it is irradiated by the same power, with a linear or circular polarisation state (in a gaussian intensity distribution).

Specifically, the thermal effect is thermal lensing and stress birefringence. As those thermal effects are the most important thermal effects present in a cutting lens, it is particularly advantageous to reduce specifically the thermal lensing and the stress birefringence.

Usually, the intensity distribution of the incident laser beam shows rotational symmetry. A fraction of the incident power on the lens is converted to heat, due to residual absorption in the lens. This heat generates dilatation of the material. The dilatation in the centre of the lens (and of the beam) is the highest, in case of a Gaussian mode, since the laser intensity shows a maximum in the middle of the beam. The tendency of the lens to expand in the middle is counteracted however by the lens edges since they stay cold. In this way, large stress differentials are generated between the centre and the edge of the lens.

If the material shows stress birefringence, its refractive index will be affected. This means for a beam with circular symmetry that the elasto-optic changes of the refractive index have a purely radial and a purely azimuthal component.

In case of incident laser radiation with linear polarization, this leads to place dependent phase shifts in the transmitted wave front and again in a degradation of the focal spot of the lens.

However, according to the invention, if the birefringent material is illuminated by a beam with radial (or azimuthal) polarisation, the polarisation direction is always parallel to one of the major axes of the local indicatrix.

Hence, according to the invention, there will be no change of the polarisation state after transmission through the lens. The stress birefringence has no influence on the transmitted wave front and there are no aberrations linked with the elasto-optic behaviour of the lens under radial (or azimuthal) polarisation. Moreover, as the radial polarisation will be better absorbed (up to a factor 2) compared with circular polarisation, for the same laser power and therefore for the same cost of the laser, a performance improvement on cutting speed could be realised (theoretically up to 200%).

The use of radially polarised laser light reduces thus the thermal effect and more particularly both stress birefringence and thermal lensing.

Advantageously, the lens used in the method according to the invention is a ZnSe lens.

Only a few materials can be made pure enough so that absorption of the laser power will not lead to overheating and eventually destructive failure.

For industrial applications, Zinc Selenide is used exclusively as raw material for these lenses. Appropriate anti-reflex coatings of the lens surfaces make the lens transmission routinely higher than 99.7%. The remaining portion constitutes the residual absorption and will appear as heat in the lens body. This heat, typically 10 to 20 Watts, leads to a number of effects which are disadvantageous for the lens focussing capabilities, although the absorption of less than 0.3 % might seem to be considered as negligible.

Indeed, chemical vapour deposited ZnSe (CVD-ZnSe) is a polycrystalline material with average grain sizes of about 60 micron diameter. This makes the material on a macroscopic level to behave as isotropic. The material is used as substrate to manufacture cutting lenses for CO₂ lasers. Due to its very high purity, the material will only absorb a minor fraction of the incident laser light. However, due to the large powers available nowadays from these high power lasers, even this minor absorption has noticeable consequences on the lens performance in terms of focusability of the radiation. The two major consequences are stress birefringence and thermal focussing, both leading to high aberrations of the transmitted wave front, with adverse effects on the cutting speed of the lens.

Therefore, according to the invention, the state of radial polarisation of the incident laser beam is not influenced by the stress birefringence in ZnSe, the transmitted laser beam stays radially polarised and the radial polarisation of the laser beam diminishes the thermal lensing in ZnSe.

Hence, it is intended according to the invention that high power, thermal effects in ZnSe lenses can be diminished, resulting in a higher cutting speed and/or higher power handling capability.

This opens up a way to maintain the focussing capabilities of ZnSe lenses even at the highest powers available today.

Other embodiments of the method according to the invention are mentioned in the annexed claims.

Although the preferred embodiments of the invention have been disclosed for illustrative purpose, those skilled in the art will appreciate that various modifications, additions or substitutions are possible, without departing from the scope and spirit of the invention as disclosed in the accompanying claims.

## Claims

1. Method for reducing thermal effect of a cutting lens used in high power laser systems, **characterised in that** use is made of radially polarised laser light.

2. Method according to claim 1, wherein said thermal effect is thermal focus lensing.

3. Method according to claim 1, wherein said thermal effect is stress birefringence.

4. Method according claim 3, wherein said lens is a ZnSe lens.
